Europäisches Patentamt

European Patent Office

Office européen des brevets

(11) Numéro de publication: **0013717**
**A1**

(12) **DEMANDE DE BREVET EUROPEEN**

(21) Numéro de dépôt: **79104864.8**

(22) Date de dépôt: **04.12.79**

(51) Int. Cl.³: **G 06 K 15/08, B 41 J 1/30**

(30) Priorité: **02.01.79 US 42**

(43) Date de publication de la demande: **06.08.80**
**Bulletin 80/16**

(84) Etats contractants désignés: **BE CH DE FR GB NL**

(71) Demandeur: **International Business Machines Corporation, Armonk, N.Y. 10504 (US)**

(72) Inventeur: **Kane, Milburn Housman, 9812 Lonsdale Drive, Round Back, Texas 78664 (US)**

(74) Mandataire: **Siccardi, Louis, COMPAGNIE IBM FRANCE Département de Propriété Industrielle, F-06610 La Gaude (FR)**

(54) **Procédé et système de commande du marteau de frappe dans une imprimante à élément d'impression rotatif.**

(57) Commande d'un marteau à force de frappe variable dans une imprimante à élément d'impression rotatif à languettes porte-caractères radiales, monté sur un chariot, lequel est en mouvement au moment de la frappe. Le chariot (1) de l'imprimante est entraîné à vitesse variable en regard d'un document (12) par un moteur pas-à-pas (8). La vitesse du chariot (1) dépend du temps mis par l'élément d'impression (2) pour amener une languette porte-caractères (9A, 9B, 9C,) en regard du marteau (10) à force variable. Les circuits logiques de l'imprimante comportent une table, laquelle est d'abord adressée avec un code de vitesse chariot correspondant au temps de sélection du caractère. La sortie de la table est un point de départ du cycle marteau. La table est ensuite adressée avec un code vitesse et un code de force de frappe. La sortie de la table donne alors un délai devant s'écouler entre ledit point de départ et l'instant d'excitation du marteau (10). Les circuits logiques déterminant alors la durée de l'excitation du marteau (10) en fonction de la force de frappe désirée.

1

# PROCEDE ET SYSTEME DE COMMANDE DU MARTEAU DE FRAPPE DANS UNE IMPRIMANTE A ELEMENT D'IMPRESSION ROTATIF

## Description

### Domaine technique

La présente invention concerne de façon générale les imprimantes à élément d'impression rotatif à languettes porte-caractères radiales monté sur un chariot qui s'échappe à différentes vitesses pendant l'impression, l'élément d'impression étant entraîné en rotation en mode marche-arrêt pour la sélection des caractères. La présente invention concerne plus particulièrement un procédé et un système pour la détermination et la commande de l'instant et de la durée de l'excitation d'un marteau d'impression qui doit frapper l'élément d'impression pendant l'échappement du chariot.

### Etat de la technique antérieure

Les imprimantes qui comprennent un chariot portant un élément d'impression rotatif à languettes porte-caractères radiales sont bien connus dans l'art antérieur et beaucoup de ces machines sont disponibles sur le marché. Ces imprimantes peuvent être classées en considérant soit la rotation de l'élément d'impression pour la sélection des caractères, soit l'échappement du chariot.

Lorsque l'on considère la rotation de l'élément d'impression, ces imprimantes peuvent être encore divisées en une première catégorie dans laquelle l'élément d'impression tourne de façon continue et en une deuxième catégorie dans laquelle il tourne de façon intermittente.

2

Dans la catégorie, à élément d'impression à rotation continue, le marteau frappe l'élément d'impression pendant la rotation de ce dernier. Dans les imprimantes à élément d'impression à rotation intermittente, l'élément d'impression est entraîné en rotation jusqu'à ce qu'un caractère désiré soit aligné pour l'impression, puis la rotation est stoppée. Il n'y a aucune rotation de l'élément d'impression pendant l'opération d'impression réelle.

En ce qui concerne l'échappement du chariot, certaines imprimantes provoquent l'arrêt du chariot chaque fois qu'une impression doit être éxecutée. Dans d'autres imprimantes, le chariot est en mouvement au moment où se déroule l'impression et ainsi l'impression se déroule à la volée. Dans ces deux types d'imprimantes, c'est-à-dire dans les imprimantes du type à chariot en mouvement lors du déroulement de l'impression et dans les imprimantes du type à chariot stoppé lors de l'impression, l'élément d'impression peut être ou non entraîné en rotation au moment de cette impression. Dans certaines imprimantes dans lesquelles le chariot est animé d'une vitesse constante lors de l'impression, ledit chariot est accéléré, décéléré ou stoppé entre les positions d'impression le long d'une ligne d'impression sur le papier qui est imprimé. Ces diverses phases du mouvement du chariot permettent de tenir compte du temps nécessaire à la sélection des caractères. En effet, l'échappement du chariot entre les positions d'impression doit être synchronisé avec l'entraînement en rotation de l'élément d'impression qui permet d'amener un caractère désiré en position d'impression par rapport au marteau de frappe pour son impression sur le papier. D'après ce qui précède, de nombreuses combinaisons d'échappement de chariot et de sélection de caractères sont possibles.

3

La publication US -A- 4 030 591 présente une imprimante dans laquelle le chariot se déplace à plusieurs vitesses pendant le déroulement de l'impression et dans laquelle le déclenchement du marteau de frappe dépend de la vitesse dudit chariot, comme c'est le cas dans la présente invention. Cependant, le dispositif présenté dans cette publication ne comporte pas de moyen permettant de modifier la force de frappe du marteau contre l'élément d'impression pour obtenir une impression de qualité élevée.

La publication US -A- 3 858 509 présente une imprimante à roue d'impression à languettes porte-caractères radiales dans laquelle la force de frappe du marteau peut être faible ou forte. Cependant, l'impression ne se fait pas à la volée et il n'est donc pas nécessaire de coordonner la vitesse du chariot et l'actionnement du marteau de frappe.

Exposé de l'invention

La présente invention concerne un procédé et un système de commande d'un marteau de frappe à courant constant pour une imprimante à roue d'impression à languettes porte-caractères radiales montée sur un chariot. Le chariot s'échappant et la rotation de l'élément d'impression devant être stoppée à la suite de la sélection d'un caractère pour l'impression, l'instant d'excitation du marteau dépend du temps nécessaire à la sélection du caractère et la durée de l'excitation du marteau déterminera la force de la frappe pour la commande de l'impression. On utilise une table logique qui est sélectivement et séquentiellement adressée. C'est-à-dire que le temps de sélection est converti en un code d'adresse de vitesse de chariot et la sortie de la table donne un point de synchronisation servant à

4

déterminer finalement l'instant d'excitation du marteau. Le point de synchronisation est variable, ne dépend pas de l'arrêt de l'élément d'impression et correspond à la position du chariot, en unités d'échappement, à partir du point d'impression sur la feuille à imprimer. L'adresse de vitesse correspond à la vitesse du chariot à l'instant où un caractère se trouve en position d'impression. La table est de nouveau adressée. Cette fois, l'adresse est formée du code de vitesse et de la force de frappe désirée qui est convertie en un code de frappe. La sortie de la table constitue l'instant d'excitation réel du marteau à partir du point de synchronisation. La durée de l'excitation du marteau est alors déterminée par le code de frappe de la table. Le code de frappe est également utilisé pour déterminer l'instant où la sélection du caractère suivant peut commencer.

Brève description des figures des dessins

La Figure 1 représente une imprimante à roue d'impression du type à languettes porte-caractères radiales portée par un chariot qui doit être commandée selon la présente invention.

La Figure 2 est une représentation schématique montrant la relation existant entre le point d'excitation du marteau et le point d'impact lorsque le chariot se déplace à une vitesse relativement élevée.

La Figure 3 illustre la même relation que la Figure 2 mais dans le cas où le chariot se déplace à une vitesse relativement lente.

La Figure 4 est une représentation graphique des différentes phases d'accélération et de décélération du chariot lorsque celui-ci passe par les positions d'impression successives.

La Figure 5 est une représentation schématique de certains retards et de largeurs d'impulsions de commande du marteau de frappe utilisés dans la présente invention pour commander ledit marteau de frappe.

La Figure 6 est un tableau des termes d'adresses appliqués à une mémoire permanente et des sorties correspondantes de la mémoire permanente.

La Figure 7 est une représentation schématique de la structure utilisée pour commander d'une part le fonctionnement des moteurs entraînant le chariot et l'élément d'impression, et d'autre part le marteau d'impression.

La Figure 8 est une représentation schématique de la structure comprise dans le bloc de commande du marteau de la Figure 7.

Les Figures 9 et 10 représentent chronologiquement les diverses étapes de commande du marteau de frappe.

Description d'un mode de réalisation
de l'invention

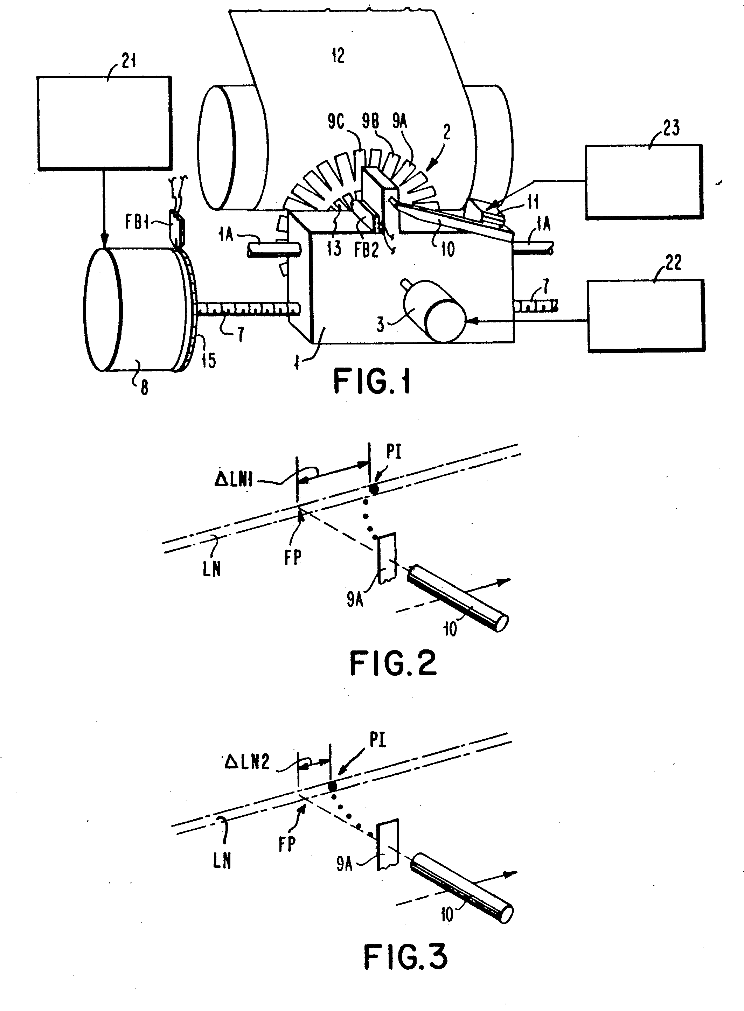

La Figure 1 représente schématiquement des éléments d'une imprimante à roue d'impression qui sont concernés par la présente invention. Chacun de ces éléments est bien connu et est donc représenté sous une forme schématique. Le marteau de frappe, son circuit d'excitation et la commande de celui-ci sont plus particulièrement intéressants.

Un chariot 1 latéralement mobile, est monté sur une tige de guidage 1A et une vis-mère 7. Le chariot 1 porte un élément d'impression rotatif 2 entraîné par un moteur pas à pas 3. Le chariot 1 est entraîné par la vis-mère 7 commandée par un moteur pas-à-pas 8.

L'élément d'impression 2 est composé d'un moyeu central en forme de disque d'où partent un certain nombre de languettes porte-caractères radiales 9A, 9B, 9C, etc... L'impression d'un caractère désiré est provoquée par l'actionnement d'un marteau de frappe 10 commandé par un solénoïde 11. Le marteau 10 et le solénoïde 11 sont tous deux montés sur le chariot 1. Lorsque la languette portant le caractère choisi arrive en position d'impression en face du marteau de frappe 10, le solénoïde 11 est excité pour entraîner le marteau 10 vers cette languette. L'instant de l'excitation du solénoïde 11 sera appelé par la suite "instant d'excitation du marteau". Un courant constant est appliqué au solénoïde 11 pendant un temps suffisant pour provoquer la frappe de la languette par le marteau 10 et assurer l'impression du caractère sur le papier 12. La durée de l'application du courant commande le contraste de l'impression et sera appelée par la suite "temps d'excitation du marteau". Une roue émettrice 13 fixée à l'élément d'impression 2 et tournant avec lui, coopère avec un détecteur magnétique FB2 pour engendrer des impulsions qui commandent le fonctionnement de l'imprimante. La roue émettrice 13 comporte une série de dents dont chacune correspond à une languette porte-caractères 9A, 9B, 9C, etc... Une impulsion de repère est engendrée à chaque révolution de l'élément d'impression 2 par la dent unique d'un autre émetteur (non représenté). Ainsi, la position angulaire de l'élément d'impression 2 peut être déterminée à n'importe quel moment en comptant le nombre d'impulsions reçues depuis la dernière impulsion de repère. Une roue émettrice crantée 15 est montée sur

7

l'arbre du moteur 8 et coopère avec un transducteur FB1 pour délivrer des impulsions qui indiquent la position du chariot 1.

Les moteurs pas à pas 3 et 8 sont excités par des circuits de commande classiques 21 et 22. Un circuit de commande qui pourrait être utilisé dans ce but est présenté, par exemple, dans la publication US -A- 3 636 429. Le solénoïde 11 du marteau est excité par un circuit de commande de marteau 23 classique.

Le positionnement du chariot 1 et celui de l'élément d'impression 2 doivent être coordonnés pour tenir compte de l'instant d'excitation du marteau et de la durée de cette excitation, pour obtenir un positionnement et une impression appropriée du caractère sur le papier 12. En d'autres termes, la vitesse à laquelle le chariot 1 doit être entraîné dépend du temps pendant lequel l'élément 2 doit tourner pour sélectionner un caractère. A son tour, l'instant d'excitation du marteau dépend à la fois de la vitesse du chariot et du temps nécessaire à la sélection du caractère. L'élément d'impression 2 et le chariot 1 doivent être tous deux dans une position appropriée, qu'ils soient en mouvement ou non, au moment où le marteau 10 frappe l'élément d'impression 2.

Les Figures 2 et 3 représentent la relation existant entre l'instant d'excitation FP du marteau 10 et le point d'impact PI sur le papier 12. La Figure 2 représente cette relation lorsque le chariot 1 s'échappe à une vitesse relativement élevée le long de la ligne d'impression LN. La Figure 3 représente la même relation lorsque le chariot 1 s'échappe à une vitesse plus lente. La Figure 2 montre que le marteau doit être déclenché suffisamment à l'avance, comme indiqué par le

8

long intervalle ΔLN1, pour que la languette 9A frappe le papier 12 dans une position appropriée. Sur la Figure 3 l'intervalle ΔLN2 est plus court. Ainsi, il apparaît que lorsque la vitesse du chariot 1 est modifiée, l'instant d'excitation du marteau doit l'être aussi. Jusqu'à maintenant on a supposé en décrivant les Figures 2 et 3 que le temps de vol du marteau de frappe 10 était constant. En réalité, cela n'est pas le cas. Bien qu'il s'agisse d'un marteau à courant constant, le temps de vol varie avec la durée de l'excitation. Tant que le courant est appliqué au solénoïde 11, le marteau 10 continue à accélérer. Dans ce cas, le marteau peut être déclenché à des instants plus tardifs pour des périodes d'excitation plus longues. Donc, ΔLN1 dans la Figure 2 peut être plus court que représenté, lorsqu'il s'agit d'un caractère exigeant l'application d'une force de frappe plus élevée pour être bien imprimé. D'une manière similaire, ΔLN2 dans la Figure 3, peut être plus long s'il s'agit d'un caractère ne demandant qu'une force de frappe faible pour être bien imprimé.

Comme indiqué dans la publication US -A- 4 030 591 citée précédemment, le chariot 10 échappe à des vitesses différentes suivant le temps requis par la rotation de l'élément d'impression 2 pour la sélection du caractère. Quatre vitesses différentes sont utilisées dans le dispositif présenté dans la publication précitée. Aux fins de l'illustration de la présente invention, le déplacement du chariot 1 sera considéré comme s'effectuant à l'une de quatre vitesses V1, V2, V3 et V4 dont les valeurs croissent dans cet ordre. En choisissant la vitesse d'échappement du chariot 1 la plus élevée pour toute modification choisie de la position en rotation de l'élément d'impression 2, on peut porter la vitesse d'impression de l'imprimante à son maximum. Au vu de ce qui précède, la présente invention a pour but de

9

fournir un dispositif de commande de l'instant d'excitation du marteau et de la durée de cette excitation en fonction d'une vitesse choisie du chariot, afin de permettre à un caractère d'être imprimé d'une manière appropriée à la position désirée sur le papier 12.

Comme indiqué précédemment en référence à la publication US -A- 4 030 591, dans le cas d'une force de frappe constante du marteau 10 il est suffisant de coordonner l'instant d'excitation du marteau et la vitesse du chariot pour obtenir une impression de la qualité désirée. Cependant, comme indiqué ici, la force de frappe du marteau est fonction de la largeur de l'impulsion d'excitation c'est-à-dire de la durée de l'excitation du marteau. Donc, la largeur de cette impulsion peut être modifiée pour faire varier le temps de vol du marteau de frappe 10. Ainsi, lorsque l'on utilise le dispositif de la présente invention, il est aussi nécessaire de coordonner l'information concernant le temps de vol et l'information concernant la vitesse du chariot et l'instant d'excitation du marteau. C'est-à-dire que l'instant d'excitation et la durée de l'excitation du marteau 10 doivent être coordonnés avec la vitesse d'échappement du chariot 1.

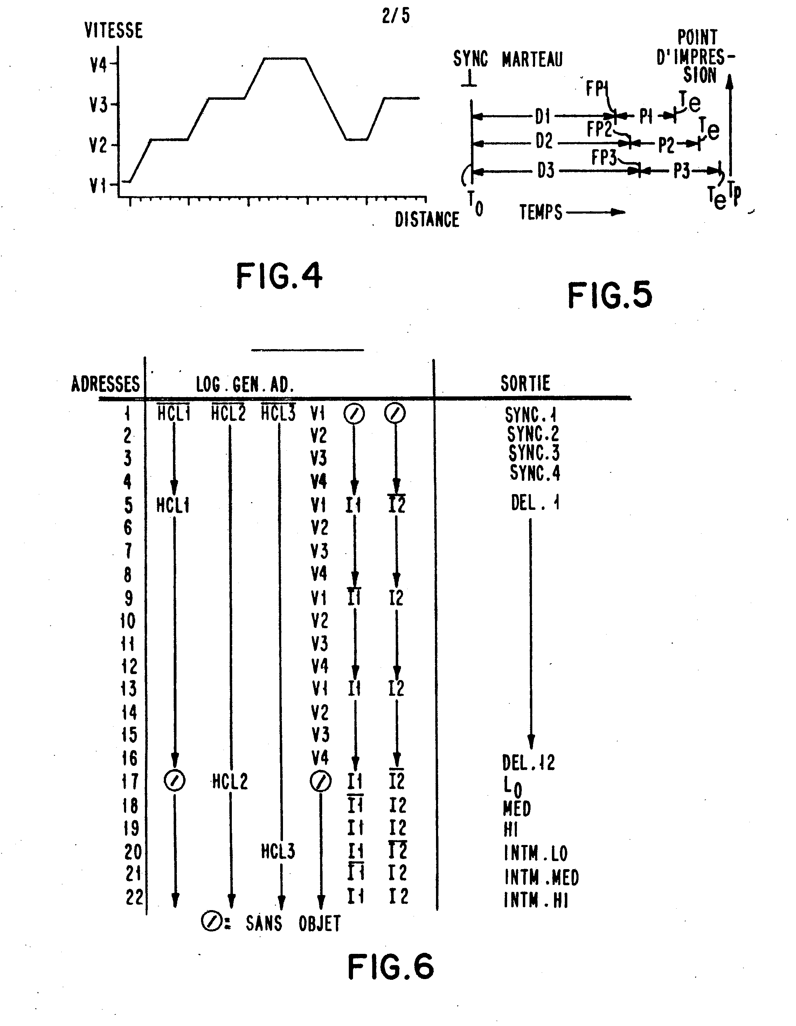

La relation existant entre l'instant d'excitation du marteau et la durée de son excitation d'une part et la vitesse d'échappement du chariot d'autre part, sera mieux comprise en se reportant aux Figures 4 et 5. La Figure 4 illustre un exemple du mouvement du chariot 1 sur une certaine distance aux quatre différentes vitesses V1, V2, V3, et V4. Dans le cas présent, cette distance est d'approximativment 1,27 cm. La Figure 5 présente des largeurs d'impulsion de durées P1, P2 et P3. Avant l'excitation du marteau 10 à l'une des trois largeurs d'impulsion permettant d'obtenir l'application de la

10

force de frappe désirée, le chariot 1 se déplaçant à l'une des quatre vitesses différentes citées précédemment, un certain délai ou retard approprié doit s'écouler. Ce délai s'écoule entre l'initiation du cycle de fonctionnement du marteau de frappe et son excitation effective. L'instant d'initiation du cycle de fonctionnement du marteau de frappe correspond au point de synchronisation du marteau. D'après ce qui précède, il existe une combinaison de l'une des quatre vitesses possibles du chariot 1 et de l'une des trois largeurs d'impulsion, P1, P2, P3 qui provoque toujours le positionnement du point d'impact ou d'impression sur le papier 12 à la position désirée. La Figure 5 donne des exemples des différents délais D1, D2 et D3. Ces délais doivent s'écouler entre l'instant T0 correspondant au point de synchronisation du marteau et les instants FP1, FP2 et FP3 de son excitation afin d'assurer le déroulement de l'impression à l'instant Tp au point d'impression. Etant donné qu'une seule vitesse de chariot V1 est considérée dans cet exemple, les divers délais D1, D2 et D3 dépendent de la largeur de chacune des impulsions P1, P2 et P3. La figure montre que l'impulsion P1 est la plus courte, que l'impulsion P2 est plus longue que P1 et que P3 est plus longue que P1 et P2. Chaque impulsion est respectivement amorcée aux instants d'excitation FP1, FP2 et FP3. Chacune de ces trois impulsions se termine respectivement à un certain instant Te précédant l'instant de l'impression Tp. La différence entre Te et Tp représente le vol libre du marteau 10. Etant donné que l'impulsion P3 entraîne le marteau de frappe 10 avec la plus grande force, la durée du vol du marteau entre FP3 et Tp est la plus courte comme l'est le temps s'écoulant entre la fin de l'impulsion Te et l'instant d'impression Tp. Lorsque le marteau est actionné par l'impulsion P2, son temps de vol est plus long que dans le cas d'un actionnement

11

par P3. Lorsque le marteau est actionné par P1, son temps de vol est le plus long.

Le point de synchronisation T0 du marteau, dans la Figure 5, n'est valable que pour la vitesse V1. Pour les autres vitesses V2, V3 et V4 considérées ici, la position du point de synchronisation par rapport à Tp variera.

Ce qui précède montre que l'on détermine tout d'abord le temps de sélection. En se basant sur le temps de sélection, le chariot 1 est accéléré ou décéléré jusqu'à ce qu'il atteigne une vitesse qui est celle du chariot au moment de l'impression. Le point de synchronisation du marteau est alors déterminé pour commencer le cycle de fonctionnement du marteau. Le point de synchronisation du marteau dépend de la vitesse du chariot. L'instant d'excitation du marteau 10 par rapport au point de synchronisation est déterminé en se basant sur la vitesse du chariot et sur la force de frappe désirée. La durée d'excitation du marteau est alors déterminée en se basant sur la force de frappe désirée.

La Figure 6 illustre une table de mémoire permanente (ROM) qui indique en sortie des points de synchronisation (SYNC 1 à SYNC 4) pour les quatre premières positions d'adresse (1 à 4). Les douze positions d'adresse suivantes (5 à 16) indiquent douze retards (DEL 1 à DEL 12). Les adresses 17, 18 et 19 indiquent trois forces de frappe du marteau à savoir faible (LO), moyenne (MED) et forte (HI) et les adresses 20, 21, 22 indiquent des délais de redémarrage de sélection. Chacune de ces valeurs est représentée par un code binaire à huit bits sur le bus de sortie de la mémoire ROM. Les entrées permettant d'obtenir chacune des sorties sont indiquées

12

dans la colonne "logique de génération d'adresses de mémoire ROM" (LOG. GEN. AD.).

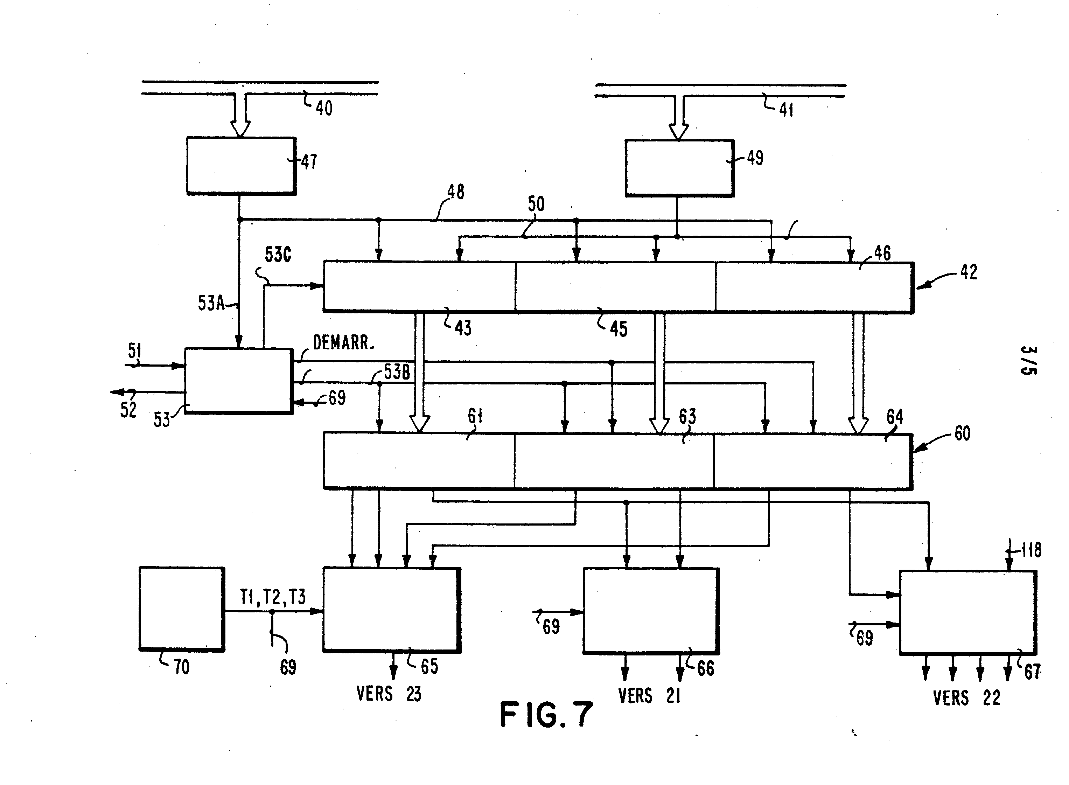

La Figure 7 est une représentation schématique de la structure qui peut être utilisée pour générer les signaux de commande appropriés permettant d'exciter le circuit de commande de moteur d'échappement 21, le circuit de commande d'élément d'impression 22 et le circuit de commande de marteau de frappe 23. Les données à imprimer sur le papier 12 sont obtenues à partir d'une source de données qui peut être une mémoire intermédiaire de données classique ou un dispositif d'entrée à clavier. Les données en provenance de la source de données sont envoyées à l'entrée d'un calculateur ou microprocesseur approprié. Seule la sortie du processeur est représentée à la Figure 7. Le processeur reçoit les données d'entrée et effectue certains calculs, puis envoie une série de nombres binaires sur un bus d'adresses 40 ou sur un bus de données 41. En réponse aux données reçues du processeur, le circuit de la Figure 7 génère des impulsions de commande appropriées qui sont appliquées aux circuits 21, 22 et 23. Ces impulsions provoquent le mouvement du chariot et de l'élément 2 aux positions désirées par l'intermédiaire des moteurs pas à pas 8 et 3 et commandent le marteau de frappe 10 pour l'impression des données délivrées par la source de données. Les signaux d'entrée appliqués à chacun des circuits de commande 21 et 22 comprennent des informations indiquant le sens dans lequel doit tourner le moteur pas-à-pas et le nombre de pas qu'il doit effectuer. Une impulsion est délivrée par le circuit de commande approprié pour chaque pas des moteurs 3 et 8.

Un ensemble de registres intermédiaires référencés globalement 42 reçoit les informations appropriées du processeur par le bus d'adresses 40 et le bus de données 41. Les registres intermédiaires 42 comprennent un registre d'état de fonctionnement 43 dans lequel sont emmagasinées des informations concernant les vitesses de chariot et les forces de frappe, un registre d'échappement 45 qui reçoit et emmagasine des données concernant la longueur du mouvement du chariot 1 et un registre de sélection 46 qui reçoit et emmagasine les données issues du processeur et concernant la sélection des caractères sur l'élément d'impression 2. Pour charger des données dans les registres intermédiaires 42 à partir du processeur, des données d'adresses issues du bus d'adresses 40 sont appliquées à une unité de décodage d'ordres 47 et de là au travers d'un bus de commande 48, aux registres intermédiaires respectifs. D'une manière similaire, les données issues du bus de données 41 sont appliquées à une porte d'entrée de bus de données 49, puis par le bus de données 50, aux entrées respectives des registres intermédiaires 42. Le processeur est également connecté par la ligne de données disponibles 51 et la ligne de demande de données 52 à l'unité de commande de séquence 53. L'unité de commande de séquence 53 commande la séquence de fonctionnement du circuit de la Figure 7 et du processeur. La synchronisation de l'unité de commande de séquence 53 est commandée par l'horloge 70 au moyen de la ligne 69. Etant donné que l'impression est assurée par le dispositif de la présente invention lorsque le chariot est en mouvement, les registres intermédiaires 42 assurent l'emmagasinage intermédiaire nécessaire pour avoir des données disponibles pour l'impression et permettre le fonctionnement continu du système. Cette caractéristique sera mieux comprise en se reportant aux paragraphes suivants.

Outre les registres intermédiaires 42, la Figure 7 re-

14

présente un ensemble de registres de fonctionnement 60. A la réception d'un ordre de chargement approprié par la ligne 53B, les registres de fonctionnement 60 reçoivent et emmagasinent les informations contenues dans les registres intermédiaires 42. Ceci permet alors aux registres intermédiaires d'être chargés avec de nouvelles données tandis que les données des registres de fonctionnement 60 sont traitées. Les registres de fonctionnement 60 comprennent un registre de sortie d'états de fonctionnement 61 qui reçoit et emmagasine des données issues du registre d'états de fonctionnement 43, un compteur régressif d'échappement 63 qui reçoit et emmagasine des données issues du registre d'échappement 45 et un compteur régressif de sélection 64 qui reçoit et emmagasine des données issues d'un registre de sélection 46. Les sorties respectives des registres 61, 63 et 64 sont reliées à l'unité de commande de marteau 65 pour la commande du marteau de frappe 10, à la logique de commande du moteur d'échappement 66 pour la commande du chariot 1 et à la logique de commande du moteur de sélection 67 pour la commande de l'élément d'impression 2.

Le fonctionnement du système représenté à la Figure 7 commence par l'application d'un signal de commande sur la ligne 53A, à l'unité de commande de séquence 53. A mesure que chaque série de données issue du processeur est traitée, l'unité de commande de séquence 53 indique au microprocesseur par la ligne 52 que les registres intermédiaires 42 sont prêts à recevoir de nouvelles données. Une réponse de données disponibles issue du processeur par la ligne 51 amorce alors une séquence de commande qui permet à un signal d'échantillonnage de données issu de l'unité de commande de séquence 53 sur la ligne 53C de conditionner les registres intermédiaires 42 pour la réception de nouvelles données

15

issues du processeur. Des registres appropriés parmi les registres 42 sont adressés par le processeur au travers du bus de commande 48 et des données à emmagasiner dans ceux-ci sont appliquées par l'entrée 49 et le bus de données 50. Une fois que les données sont emmagasinées dans les registres 42, l'unité de commande de séquence 53 délivre un signal de commande de chargement sur la ligne 53B. Ce signal est appliqué à chacun des registres de fonctionnement 60 pour provoquer le transfert des données emmagasinées dans les registres intermédiaires 42 vers les registres de fonctionnement 60. Puis, l'unité de commande de séquence 53 délivre par la ligne 52 une demande de nouvelles données au processeur, pour emmagasinage dans les registres intermédiaires 42. Tandis que se déroule le rechargement des registres 42, on peut traiter les données dans les registres de fonctionnement 60.

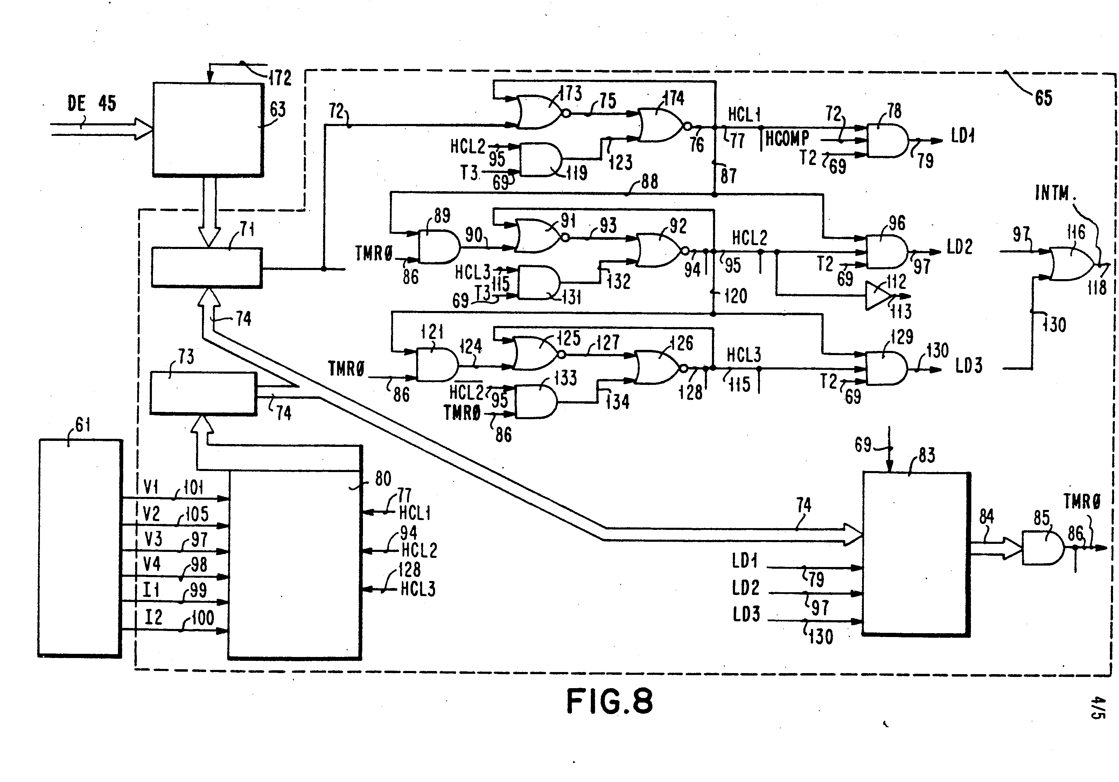

On se reportera maintenant à la Figure 8 qui représente la structure comprise dans le bloc de commande de marteau 65 de la Figure 7. Sur cette figure on a également représenté le compteur régressif d'échappement 63. Les données emmagasinées dans le compteur 63 sont appliquées sous la forme d'une séquence de 12 bits à une unité de comparaison 71. Ce sont seulement les 8 bits d'ordre inférieur qui sont utilisés par l'unité de comparaison 71. Les 4 bits d'ordre plus élevé sont comparés à zéro. Les 8 bits représentent le nombre d'unités d'échappement qui sépare le chariot 1 du point d'échappement nul (point d'impression). L'information concernant la position du chariot représentée par les 8 bits est donnée par le détecteur FB1. La sortie de FB1 est appliquée sur la ligne 172. Chaque unité peut être représentée par un nombre quelconque prédéterminé d'impulsions issues du détecteur FB1.

Le registre de sortie d'états de fonctionnement 61 est également représenté dans la Figure 8. Les informations concernant le caractère suivant à imprimer sont emmagasinées dans le registre 61. Le temps nécessaire à la rotation de l'élément d'impression 2 pour la sélection du caractère est emmagasiné dans le registre 61 sous la forme d'un code d'adresses de vitesse V1 à V4. L'opération de conversion de code qui consiste à convertir le temps de sélection du caractère en une adresse de vitesse, peut être exécutée par le processeur avant le chargement du registre 61. Le code d'adresse de vitesse forme une partie d'un multiplet d'information de caractère emmagasiné dans le registre 61. Le reste du multiplet d'information de caractère emmagasiné dans le registre 61 est un code de frappe ou d'impact I1, I2 représentant la force de frappe désirée. L'opération de conversion de code consistant à convertir trois forces de frappe en un code de frappe à 2 bits peut également être exécutée par le processeur avant le chargement du registre 61. Le code de frappe I1, I2 est obtenu en appliquant les règles suivantes. Une force de frappe faible (LO sur la Fig. 6) est codée sous la forme I1 $\overline{I2}$. Une force de frappe moyenne (MED sur la Fig. 6) est codée sous la forme $\overline{I1}$ I2 et une force de frappe élevée (HI sur la Fig. 6) est codée sous la forme I1 I2.

Celle des vitesses V1 à V4 à laquelle le chariot 1 doit s'échapper suivant le temps de sélection du caractère, est alors appliquée à la logique de génération d'adresse de mémoire permanente 80. Une adresse est générée par la logique 80 et est appliquée à la mémoire permanente 73. La sortie de la mémoire ROM 73 alors appliquée sur le bus de sortie 74 vers un compteur régressif de délais ou retards 83 et vers une unité de comparaison 71. La sortie sur le bus 74 indique le nombre d'unités d'échappement restant à effectuer pour atteindre le point d'impression sur le papier 12, au moment où le cycle de fonctionnement du marteau doit être amorcé. L'instant où le cycle de fonctionnement du marteau doit être amorcé constitue le point de synchronisation du marteau. Comme indiqué précédemment, ce sont seulement les 8 bits d'ordre inférieur du compteur 63 qui sont comparés dans l'unité de comparaison 71 aux 8 bits sortant de la mémoire 73. On vérifie que les 4 bits d'ordre plus élevé issues du compteur 63 sont tous des zéros.

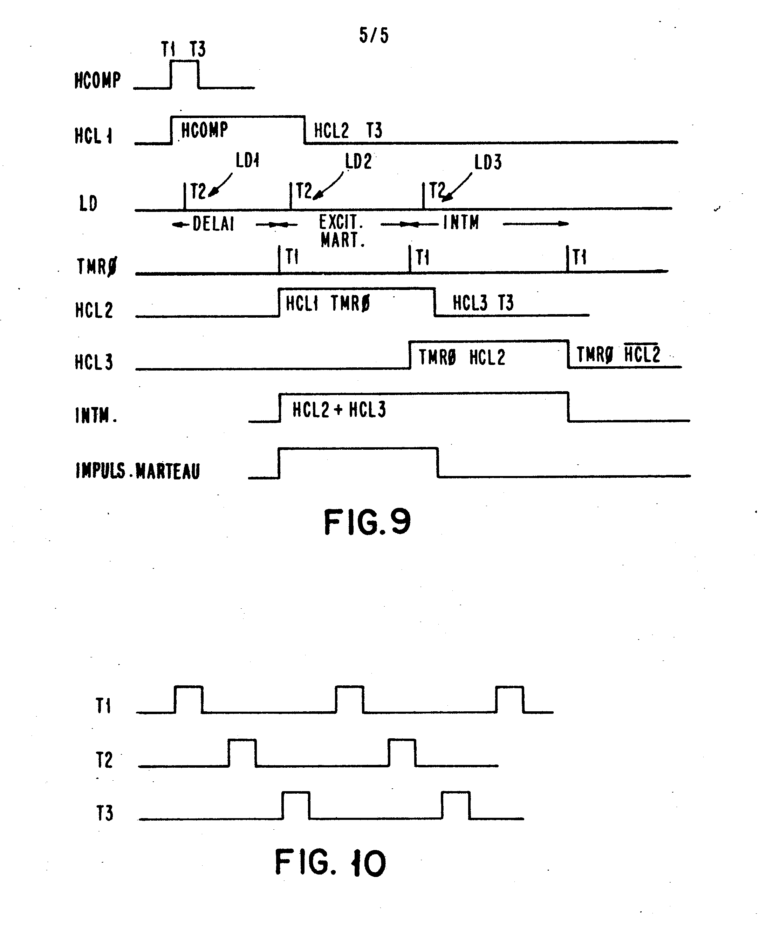

Lorsque le résultat de la comparaison est l'égalité entre le compte du compteur 63 qui représente la position du chariot et le compte emmagasiné dans la mémoire 73 qui représente la distance du point d'impression au point où la synchronisation du marteau est réalisée, un signal de sortie HCOMP est appliqué par la ligne 72 à partir de l'unité de comparaison 71, à une bascule formée des portes NI 173 et 174. Le signal HCOMP sur la ligne 72 a pour but de conditionner la bascule et est tout d'abord appliqué à la porte NI 173. La sortie de la porte NI 173 est alors appliquée par la ligne 75 à la porte NI 174 dont la sortie est constituée par un premier signal de commande de marteau HCL1 transféré par les lignes 76 et 77 à la porte ET 78. Les autres entrées de la porte ET 78 sont le signal HCOMP appliqué par la ligne 72 et l'instant T2 appliqué par la ligne 69 depuis l'horloge 70 de la Figure 7. Les impulsions d'horloge sont des impulsions à haute fréquence, sans chevauchement, utilisées pour obtenir un fonctionnement séquentiel des bascules. Elles sont représentées dans les dessins sous la forme de la ligne 69 pour simplifier les figures mais constituent en fait 3 signaux séparés T1, T2 et T3 tels que représentés à la Figure 10. Lorsque toutes les entrées de la porte ET 78 sont au niveau haut, un signal de sortie LD1 est présent sur la ligne 79.

18

Le signal HCL1 sur la ligne 77 est appliqué à la logique de génération d'adresses de mémoire 80. Les sorties V1, V2, V3, V4, I1 et I2 du registre de sortie d'états de fonctionnement 61 sont également respectivement appliquées à la logique de génération d'adresses de mémoires 80 par les lignes 101, 105 et 97 à 100. Le niveau haut ou bas de ces entrées en association avec le signal HCL1 au niveau haut détermineront la sortie de la logique 80 et l'information à adresser dans la mémoire ROM 73. La sortie de la mémoire ROM 73 est alors appliquée au compteur de retards 83.

La sortie de la mémoire ROM 73 est appliquée au décompteur de retard 83 à l'instant LD1. Le compteur 83 est décrémenté par le signal d'horloge T1 qui lui est appliqué par la ligne 69. La sortie du compteur 83 est transférée par un bus à 8 bits 84 à la porte ET 85. Lorsque le compteur 83 a été décrémenté à zéro, une sortie TMRØ est appliquée par la ligne 86.

La sortie de la bascule, formée par les portes NI 173 et 174, sur la ligne 76 est également appliquée par les lignes 87 et 88 à la porte ET 89. L'autre entrée de la porte ET 89 est constituée par le signal TMRØ appliqué par la ligne 86. Lorsque les deux entrées de la porte ET 89 sont au niveau haut, une sortie est appliquée par la ligne 90 à la bascule formée des portes NI 91 et 92. La sortie sur la ligne 90 appliquée à la porte NI 91 conditionne la bascule. La sortie de la porte NI 91 est appliquée par la ligne 93 à la porte NI 92. Lors du conditionnement de la bascule formée des portes NI 91 et 92, un deuxième signal de commande de marteau HCL2 est appliqué par les lignes 94 et 95 à la porte ET 96. Les autres entrées de la porte ET 96 sont constituées par le signal HCL1 sur la ligne 87 et l'instant T2 sur la ligne 69. Lorsque les entrées de la porte ET 96 sont

19.

au niveau haut, une sortie LD2 est appliquée à la ligne 97.

Le signal HCL2 est appliqué par la ligne 94 à la logique de génération d'adresses de mémoire 80 en même temps que les sorties issues du registre d'états de fonctionnement 61. L'information est adressée dans la mémoire 73 et chargée dans le compteur de retards 83 à l'instant LD2. La valeur chargée constitue la durée de l'excitation du marteau. Le compteur 83 est à nouveau décrémenté par le signal Tl sur la ligne 69. Le signal HCL2 est appliqué par la ligne 95 à un inverseur 112. La sortie de l'inverseur 112 constitue une impulsion de marteau, laquelle est appliquée par la ligne 113 au circuit de commande de marteau 23 de la Figure 1 pour exciter le marteau 10.

Après l'excitation du marteau 10, la rotation de l'élément d'impression 2 pour la sélection d'un caractère ne doit pas commencer tant que le marteau n'a pas rebondi et n'est pas sorti du plan des languettes de l'élément 2, afin d'éviter leur cisaillement. A cette fin, l'entrée d'une porte OU 116 est constituée soit par le signal LD2 appliqué par la ligne 97, soit par le signal LD3 appliqué par la ligne 130. La sortie de la porte OU 116 est un signal d'interverrouillage de marteau (INTM) appliquée par la ligne 118 à la logique de commande 67 du moteur de sélection de la Figure 7.

La sortie HCL2 délivrée par la porte NI 92 sur la ligne 95 est également appliquée à la porte ET 119 et par la ligne 120 à la porte ET 121. L'autre entrée de la porte ET 119 est le signal T3 appliqué par la ligne 69. La sortie de la porte ET 119 est appliquée par la ligne 123 à la porte NI 174 pour restaurer la bascule formée par les portes NI 173 et 174. L'autre entrée de la porte ET 121 est constituée par le signal TMRØ transféré par la ligne 86 issue du compteur 83 et généré par celui-ci lors de sa décrémentation. Lorsque les entrées HCL2 et TMRØ de la porte ET 121 sont au niveau haut, une sortie est appliquée par la ligne 124 à une bascule formée des portes NI 125 et 126. La sortie de la porte NI 125 est appliquée par la ligne 127 à la porte NI 126 dont la sortie HCL3 est appliquée par les lignes 128 et 115 à la porte ET 129. Les autres entrées de la porte ET 129 sont constituées par la sortie HCL2 de la porte NI 92 sur la ligne 120 et par le signal T2 sur la ligne 69. La sortie de la porte ET 129 est un signal LD3 sur la ligne 130.

Le signal HCL3 sur la ligne 128 est appliqué à la logique 80 de génération d'adresses de mémoire 80, avec les sorties du registre d'états de fonctionnement 61. L'information est adressée dans la mémoire ROM 73, puis chargée dans le compteur 83 à partir du bus 74 lorsque le signal LD3 est appliqué au compteur par la ligne 130. La valeur chargée constitue la période de temps devant s'écouler jusqu'à ce que la sélection du caractère suivant puisse être amorcée. A l'apparition d'une sortie HCL3 au niveau haut sur la ligne 115 à partir de la porte 126 et d'une sortie T3 sur la ligne 69 à partir de l'horloge 70 vers la porte ET 131, la bascule formée par les portes NI 91 et 92 est restaurée. La sortie de la porte ET 131 est transférée par la ligne 132 à la porte NI 92. A la restauration de la bascule formée par les portes NI 91 et 92, une sortie de niveau bas est appliquée par la ligne 95 portant le signal HCL2 à la porte ET 133. L'autre entrée de la porte ET 133 est constituée par le signal TMRØ sur la ligne 86. La sortie de la porte ET 133 est transférée par la ligne 134 pour restaurer la bascule formée par les portes NI 125 et 126.

La séquence des différentes étapes commandées par la structure de la Figure 8 sera mieux comprise en se reportant aux Figures 9 et 10. La Figure 9 représente la relation existant entre les signaux HCOMP, HCL1, LD1, 2 et 3, TMRØ, HCL2 et 3, interverrouillage marteau (INTM) et impulsion de marteau. La Figure 10 représente la relation chronologique des impulsions d'horloge aux instants T1 à T3. Comme on l'a déjà signalé précédemment ces impulsions d'horloge sont des signaux sans chevauchement à haute fréquence utilisés pour commander le fonctionnement séquentiel des bascules indiquées ci-dessus. Dans un souci de simplification, ces impulsions sont représentées dans les dessins sous la forme de la ligne 69, mais en réalité, il existe trois signaux séparés T1, T2 et T3.

La séquence des étapes commandées par la structure de la **Figure 8** sera maintenant résumée brièvement. On vérifie le niveau du signal HCOMP sur la ligne 72. Lorsque le signal HCOMP passe au niveau haut, la bascule formée par les portes NI 73 et 74 de la Figure 8 et générant le signal HCL1, est conditionnée. Au moment du conditionnement de la bascule formée par les portes NI 173 et 174, l'entrée du compteur de retards 83 est constituée par la sortie de la mémoire ROM 73 avec l'information concernant le retard. Lors de la sortie de HCL1, un signal LD1 est finalement appliqué sur la ligne 79, ce qui transfère la sortie de la mémoire ROM 73 au compteur 83. Un signal TMRØ sur la ligne 86 conditionne la bascule formée par les portes NI 91 et 92. Au conditionnement de cette dernière bascule, un signal LD2 appliqué sur la ligne 97, charge la sortie de la mémoire ROM 73 dans le compteur 83. Ceci provoque le chargement du compteur 83 avec des informations de force de frappe faible, moyenne ou élevée. La bascule formée des portes NI 173 et 174 générant le signal HCL1 est restaurée à l'instant T3 suivant le signal LD2. Puis, une entrée de niveau haut est appliquée sur les lignes 113 et 118. On vérifie ensuite que le compteur de retard 83 est à zéro. A TMRØ, le circuit de commande du marteau 23 est coupé. A la suite de cette opération, la bascule générant le signal HCL3 est conditionnée. Le compteur de retard 83 est alors chargé au moyen d'un signal LD3 appliqué sur la ligne 130, avec l'intervalle de temps pendant lequel le marteau est en contact avec l'élément d'impression (moment d'interverrouillage). La bascule générant le signal HCL2 est restaurée à l'horloge T3 faisant suite au signal LD3. On recherche à nouveau si TMRØ est au niveau haut. Lorsque TMRØ est au niveau haut, la bascule générant HCL3 est restaurée et le signal d'interverrouillage de marteau sur la ligne 118 est mis à zéro.

On peut résumer les états de la logique comme suit:

$\overline{HCL1}$ , $\overline{HCL2}$, $\overline{HCL3}$ représente l'état lorsque l'unité de comparaison 71 n'a défecté aucune égalité. L'état HCL1, $\overline{HCL2}$, $\overline{HCL3}$ représente l'obtention d'un retard et le chargement du compteur de retard 83. L'état $\overline{HCL1}$, HCL2, $\overline{HCL3}$ représente la durée de l'excitation de l'unité de commande du marteau. L'état $\overline{HCL1}$, $\overline{HCL2}$ et HCL3 représente le délai à respecter avant le début de la sélection de caractère suivante.

23

REVENDICATIONS

1.- Procédé de commande du marteau de frappe dans une imprimante du type à élément d'impression rotatif à languettes porte-caractères radiales monté sur un chariot mobile le long de la ligne d'impression, ledit chariot portant également un marteau de frappe destiné à frapper lesdites languettes, ladite imprimante comportant des moyens de conversion des temps de sélection de caractères, en codes de vitesse du chariot, des moyens engendrant un code de force de frappe pour ledit marteau et des moyens d'emmagasinage sélectivement et séquentiellement adressés par lesdits codes pour délivrer des informations de synchronisation et des informations indiquant l'instant d'excitation du marteau **de frappe en fonction** desdites informations de **synchronisation, ledit** procédé étant caractérisé en ce qu'il comprend les étapes qui consistent à:

adresser lesdits moyens d'emmagasinage avec un code de vitesse pour déterminer un point de synchronisation,

adresser lesdits moyens d'emmagasinage avec ledit code de vitesse et un code de force de frappe pour déterminer un instant d'excitation dudit marteau en fonction dudit point de synchronisation, et

exciter ledit marteau audit instant d'excitation et pendant un intervalle de temps correspondant audit code de force de frappe.

2.- Système de commande du marteau de frappe dans une imprimante à élément d'impression rotatif, à languettes porte-caractères radiales, monté sur un

24

chariot mobile le long de la ligne d'impression,
ledit chariot portant un marteau de frappe destiné
à frapper lesdites languettes, les informations
disponibles pour ledit système consistant en une
information de vitesse du chariot dépendant du
temps de sélection d'un caractère, une information
de frappe dépendant d'une force de frappe désirée
et une information de position du chariot par
rapport à un point d'impression désiré sur ladite
ligne d'impression, ledit système étant caractérisé
en ce qu'il comporte:

des moyens comparant ladite information de vitesse
de chariot à ladite information de position de
chariot,

des moyens qui, lors de l'existence d'une égalité
entre lesdites informations de vitesse et de
position du chariot, établissent un point de
synchronisation du marteau servant à déterminer
l'instant d'excitation du marteau,

des moyens déterminant l'instant d'excitation du
marteau en fonction des informations de vitesse de
chariot et de force de frappe du marteau, et

des moyens déterminant la durée de l'excitation du
marteau en fonction de ladite information de force
de frappe du marteau.

3.- Système selon la revendication 2, caractérisé en
ce qu'il comporte un table logique pour l'emmagasinage des points de synchronisation et des durées
d'excitation du marteau pour les caractères à
imprimer par ladite imprimante.

4.- Système selon la revendication 3, caractérisé en ce qu'il comprend des moyens pour tout d'abord adresser ladite table avec ladite information de vitesse de chariot afin d'obtenir un point de synchronisation pour l'instant d'excitation du marteau pour un caractère à imprimer.

5.- Dispositif selon la revendicaiton 4, caractérisé en ce qu'il comprend des moyens adressant ensuite ladite table avec lesdites informations de vitesse de chariot et de force de frappe du marteau pour obtenir la durée d'excitation du marteau pour un caractère à imprimer.

6.- Système selon la revendication 5, caractérisé en ce qu'il comprend des moyens excitant ledit marteau audit instant d'excitation.

7.- Système selon la revendication 6, caractérisé en ce qu'il comprend des moyens coupant l'excitation dudit marteau à la fin de la période d'excitation du marteau.

8.- Système selon la revendication 7, caractérisé en ce qu'il comprend des moyens retardant la sélection du caractère suivant pour éviter toute interférence entre ledit marteau et les languettes porte-caractères dudit élément d'impression.

FIG.1

FIG.2

FIG.3

0013717

**FIG.4**

VITESSE

**FIG.5**

SYNC MARTEAU — POINT D'IMPRES-SION

**FIG.6**

| ADRESSES | LOG . GEN . AD. | | | | | | SORTIE |
|---|---|---|---|---|---|---|---|
| 1 | HCL1 | HCL2 | HCL3 | V1 | ⊘ | ⊘ | SYNC.1 |
| 2 | | | | V2 | | | SYNC.2 |
| 3 | | | | V3 | | | SYNC.3 |
| 4 | | | | V4 | | | SYNC.4 |
| 5 | HCL1 | | | V1 | I1 | Ī2 | DEL.1 |
| 6 | | | | V2 | | | |
| 7 | | | | V3 | | | |
| 8 | | | | V4 | | | |
| 9 | | | | V1 | ĪĪ | I2 | |
| 10 | | | | V2 | | | |
| 11 | | | | V3 | | | |
| 12 | | | | V4 | | | |
| 13 | | | | V1 | I1 | I2 | |
| 14 | | | | V2 | | | |
| 15 | | | | V3 | | | |
| 16 | | | | V4 | | | DEL.12 |
| 17 | ⊘ | HCL2 | | ⊘ | I1 | Ī2 | L0 |
| 18 | | | | | ĪĪ | I2 | MED |
| 19 | | | | | I1 | I2 | HI |
| 20 | | | HCL3 | | I1 | Ī2 | INTM.L0 |
| 21 | | | | | ĪĪ | I2 | INTM.MED |
| 22 | | | | | I1 | I2 | INTM.HI |

⊘ = SANS OBJET

FIG.7

VERS 23

VERS 21

VERS 22

3/5

0013717

FIG.8

5/5

FIG.9

FIG. 10

Office européen
des brevets

**RAPPORT DE RECHERCHE EUROPEENNE**

0013717

Numéro de la demande

EP 79 10 4864·

| Catégorie | Citation du document avec indication, en cas de besoin, des parties pertinentes | Revendication concernée |
|---|---|---|
| A | <u>US - A - 4 101 006</u> (JENSEN et al.) <br> * tout le document * <br> -- | |
| A | <u>US - A - 4 074 798</u> (BERGER) <br> * tout le document * <br> -- | |
| D | <u>US - A- 4 030 591</u> (MARTIN et al.) <br> * tout le document * <br> ---- | |

### DOCUMENTS CONSIDERES COMME PERTINENTS

**CLASSEMENT DE LA DEMANDE (Int. Cl.)**

G 06 K   15/08

B 41 J   1/30

**DOMAINES TECHNIQUES RECHERCHES (Int. Cl.)**

B 41 J   1/00

G 06 K   15/08

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| Berlin | 11-04-1980 | ZOPF |

OEB Form 1503.1   06.78